# EUROPEAN PATENT SPECIFICATION

(11) **EP 0 851 984 B1**
(45) Date of publication and mention of the grant of the patent: **14.08.2002**
(21) Application number: 96930035.9
(22) Date of filing: 18.09.1996
(51) Int. Cl.: F16J 9/08

(54) **PISTON RING AND PISTON ASSEMBLY IN AN INTERNAL COMBUSTION ENGINE**
KOLBENRING UND KOLBENVORRICHTUNG EINER VERBRENNUNGSKRAFTMASCHINE
SEGMENT DE PISTON ET ARRANGEMENT DE PISTON POUR MOTEUR A COMBUSTION INTERNE

(30) Priority: 22.09.1995 DK 105995
(43) Date of publication of application: 08.07.1998
(73) Proprietor: MAN B&W Diesel A/S, 2450 Copenhagen SV (DK)
(72) Inventor: CRONE, Erik, DK-2610 Rodovre (DK)
(74) Representative: Indahl, Peter Jensen
(86) International application number: DK9600394
(87) International publication number: WO9711295

(56) References cited:
- WO-A-94/12815
- DE-A- 3 924 982
- FR-A- 1 193 072
- US-A- 1 365 348
- US-A- 1 988 727

## Description

The present invention relates to a piston ring and piston assembly in an internal combustion engine, particularly a two-stroke, uniflow-scavenged crosshead engine, in which the piston in its peripheral surface has several axially separated annular grooves, each having an upper and a lower groove face and a groove bottom, and in which piston rings are inserted in the annular grooves to seal the working chamber above the upper piston ring downwards during the compression and combustion strokes of the piston, at least one of the piston rings having an axial height smaller than the axial distance between the upper and the lower groove faces in the pertaining annular groove so that the piston ring can move axially in the annular groove, and having a substantially gastight ring partition allowing for an extension of the ring diameter at the mounting in the annular groove, and having several leakage tracks distributed over the periphery of the ring.

Such an assembly is known from WO94/12815, where the leakage tracks are grooves in the contact surface of the ring against the cylinder wall, i.e., the grooves extend from the upper surface to the lower surface of the ring.

Piston rings are also known with a radial cut at the ring partition where the pressure drop across the ring is controlled by means of the width of the obliquely extending radial cut, called the ring gap. In modern two-stroke crosshead engines the combustion pressure is high, resulting in high gas velocities down through the ring gap with consequent strong local heating of the underlying piston ring and of the inner surface of the cylinder liner. As the piston rings rotate in the annular grooves, the underlying piston ring may be hit in so many places by the local overheating that it looses its initial stress, whereupon it will not maintain the required sealing contact with the inner surface of the liner. After such a collapse of ring No. 2, the gas flow through the ring gap in the top ring is increased, because the cavity down to ring No. 3 has to be pressurized to achieve a smaller differential pressure across the top ring. This increases the thermal load on the top ring in the area around the ring gap and gives a risk of its collapse.

The piston top ring taught in WO94/12815 solves this problem by means of a controlled gas leak distributed on several small leakage grooves. However, these leakage grooves also involve disadvantages, especially with piston rings under a heavy load with regard to both heat and stress, partly because the material around the leakage grooves becomes very hot, partly because the grooves give rise to stress concentrations in an area of the ring which is under a heavy stress load.

US patent No. 1 988 727 describes a gastight piston ring, which completely fills out the pertaining annular groove in the direction of height. As this piston ring is not moved axially in relation to the annular groove during each engine cycle, it is unsuitable for use in modern high-output engines where the ring lifting in the annular groove is required to avoid coking and locking of the piston ring. The piston ring of the US patent is formed with a large number of recesses and notches in all ring surfaces in an attempt to avoid locking of the ring. In the lower ring surface, the major part of the contact area against the lower groove face has been removed, and there are two radially facing leakage openings of a square cross-section. The piston ring is very complex to manufacture.

US patent No. 1 365 348 describes another piston ring, which also completely fills out the pertaining annular groove in the direction of height. To avoid gas and oil accumulation in the annular groove behind the ring, the ring is formed with plane upper and lower surfaces to seal more tightly against the upper and lower surfaces of the annular groove and with radially extending tracks in its lower surface to lead away any small amounts of gas and oil seeping in from the back of the ring. This avoids a pressure build-up behind the ring.

As mentioned, it is essential in modern engines that the piston ring can move axially in the annular groove so that a ring lifting occurs in the annular groove in each engine cycle. Such a ring abuts the lower groove face during the combustion or working stroke, when the pressure in the combustion chamber is high. The annular space behind the piston ring is thus open towards the cylinder liner, for which reason there is no need to use the radially extending tracks known from said US patent to avoid a pressure accumulation behind the piston ring.

German patent No. 39 24 982 teaches a piston ring with a ring gap at the ring partition and with radially extending grooves in the upper ring surface. It is stated that such a ring design is not advantageous in heavily loaded piston rings owing to the stress concentrations around the grooves, and the grooves are therefore preferably formed in the upper groove face of the annular groove. The differential pressure across the piston ring is reduced by gas flow through the ring gap. The radially extending grooves serve for rapid pressure equalisation across the piston rings when the sealing contact of the lower ring surface with the lower groove face is broken at the lifting of the ring in the annular groove.

Japanese patent publication No. 2-48737 describes a piston ring having a plane upper and lower surface and a piston with annular grooves, where gas flow passages have been formed in the piston material between the annular grooves to control the pressure drop across the piston rings. These passages are difficult to manufacture. It is stated that the rings are dimensioned with leakages providing a uniform pressure drop across all the rings. This means that either the leakage amounts used are so small that the differential pressure across each ring only becomes slightly smaller so that no significantly wear-reducing effect is obtained, or that the volume flow of leak gas is very large in order to build up pressure in the spaces between the bottom piston rings, which increases the specific fuel consumption of the engine because a noticeable part of the gas in the combustion chamber escapes.

The object of the present invention is to provide a piston ring and piston assembly with improved operating properties for the engine as well as for the ring itself and for the cylinder liner.

In view of this object, the assembly according to the invention is characterized in that the leakage tracks are formed in the lower ring surface intended for contact with the lower groove face and are slit-shaped having a slit width facing in the peripheral direction of the ring and being at least several times larger than the slit height extending in the axial direction.

The location of the leakage tracks in the lower ring surface involves several advantages. Above all, the leak gas is prevented from hitting straight down on top of the underlying ring, and the stress concentrations become substantially smaller in the material at the outer periphery of the ring, which is heavily loaded by tensile stresses and thus sensitive to fatigue fractures. The radially outflowing leak gas hits the inner surface of the cylinder liner, but as the movement of the piston ring in relation to this inner surface is far greater than in relation to the underlying piston ring, the risk of damage to the material is substantially smaller than at the above mentioned piston top ring with axially extending leakage tracks. Another advantage is that the leakage area is unaffected by the ring wear on the outer peripheral surface of the ring.

The slit shape of the leakage tracks is essential for achieving good operating properties. At the flow through the slit-shaped tracks, the gas flow is braked by the friction between the viscous gas and the wide, relatively closely positioned wall surfaces on the ring and the lower groove face of the annular groove, respectively, whereby the gas delivers a controlled amount of energy to the material around the track, which is heated by the energy delivered. The gas typically has a temperature in the interval of 800-1800°C, and the slit shape of the tracks can reduce the highest gas velocity in the track suitably so that the temperature of the track walls is brought close to or above 500°C, also in the cases where the volume of leak gas is modest. At these high temperatures, combustion residues cannot be deposited on the track walls and coke up. It is not necessary that the high temperatures in the material are obtained for a sustained period, so long as they are obtained once in a while, as any coke fixed in the tracks will be loosened when the temperature is brought up to about 500°C.

Preferably the slit height is smaller than 1 mm, as the cross-sectional area of each leakage track becomes too high at greater heights. Especially advantageous gas flow and temperature conditions can be obtained with slit heights in the interval between 0.35 and 0.55 mm, because the closely positioned wide track walls also receive energy from the gas flow at the middle of the track and reduce the velocity thereof. At the same time largely uniform flow conditions can be achieved over the full track width. The advantageous small slit height also necessitates the use of several tracks to achieve the same cross-sectional area of the leakage tracks, and thus the total heat transmission to the ring during an engine cycle is distributed more evenly.

In a preferred embodiment, the ring height is at least eight times larger than the slit height, which gives the ring a large material thickness above the leakage track, so that the ring material distributes the energy received from the gas over a larger area. This ensures that the temperature at the upper surface of the ring is suitably lower than the high temperature on the surface of the leakage track.

The temperature in the ring material above the annular groove can also be limited by the width of the slit being no more than 20 times larger than the greatest height of the slit, as part of the heat will spread in the peripheral direction to the material located beside the annular groove.

Preferably, the ring area located diametrically opposite the ring partition is kept free of leakage tracks, as the mechanical stresses are largest in this area. By keeping the area free of leakage tracks a further load owing to stress concentrations and thermal loads is avoided.

A certain distribution of the thermal load on the ring is obtained, when it has at least four leakage tracks. However, a more suitable heat distribution is obtained when the piston ring has at least six leakage tracks in the lower ring surface. In addition to the thermal distribution, other circumstances may also be taken into account when the most suitable number of tracks is determined, such as the risk of coke deposits in the annular space between the back of the ring and the groove bottom. The leak gas will flow down past several of the piston rings on the piston, and for this it needs to move in the peripheral direction of the piston to flow from the leakage tracks in a piston ring to the leakage tracks in the underlying piston ring. The gas may draw oil residues and residual products from the combustion with it, and the risk of deposition of residual material that may coke becomes greater, the longer the gas has to flow. So as to counteract coke deposits in the annular space behind the piston ring, the piston ring preferably has from eight to sixteen leakage tracks in its lower surface. The longest flow path in the peripheral direction between two piston rings corresponds to about half of the peripheral length of the ring divided by the number of leakage tracks, if the gas flows to the closest adjacent leakage track in the following ring. It appears from this that a larger number of tracks reduces the flow path, but at the same time the manufacturing costs are increased because more tracks have to be incorporated in the ring.

The leakage tracks may advantageously be evenly distributed over the periphery of the ring, perhaps excepting the area opposite to the ring partition, to obtain uniform operating conditions.

The total cross-sectional area Aₜₒₜ of the leakage tracks may suitably be in the interval from D²/68000 to D²/5000, where D is the cylinder diameter in mm, and Aₜₒₜ is the area in mm². If the area becomes smaller than D²/68000, the reduction of the differential pressure across the piston ring becomes too modest for a substantial reduction of the ring wear. The upper area limit of D²/5000 indicates a suitable compromise between a substantial reduction of the ring wear and a not too strong deterioration of the combustion conditions and thus the specific fuel consumption. With the interval stated an advantageous long ring life can be achieved combined with good operating conditions for the engine as a whole. The area can be selected to be larger than the indicated upper area limit, but it must not be chosen to be so large that the pressure under the piston rings escapes so quickly immediately after the opening of the exhaust valve that the piston rings cannot be lifted up in the annular groove.

In especially heavily loaded piston rings, the stress concentrations around the leakage tracks can be reduced by a suitable design of the tracks. In a very favourable embodiment as to stress, the cross-section of the upper surface of the leakage track is composed of at least three circular arc sections, of which the two outermost ones have their centres positioned above the lower ring surface, and an intermediate one has its centre positioned below the lower ring surface.

An example of an embodiment of the invention will now be described in further detail below with reference to the very schematic drawing, in which
Fig. 1 shows part of a cross-section through an assembly according to the invention of piston rings arranged in annular grooves in a piston arranged in a cylinder,
Fig. 2 is a perspective view on a larger scale of the piston ring in the area around the ring partition,
Fig. 3 is a plane top view of a piston ring in an assembly according to the invention,
Fig. 4 is a section on a larger scale of the piston ring of Fig. 3 in the area around a leakage track,
Fig. 5 is a side view of the ring section of Fig. 4,
Fig. 6 is a cross-section on a larger scale of a piston ring inserted in a ring groove, and
Fig. 7 is a cross-section through a leakage track having an advantageous shape as concerns stress.

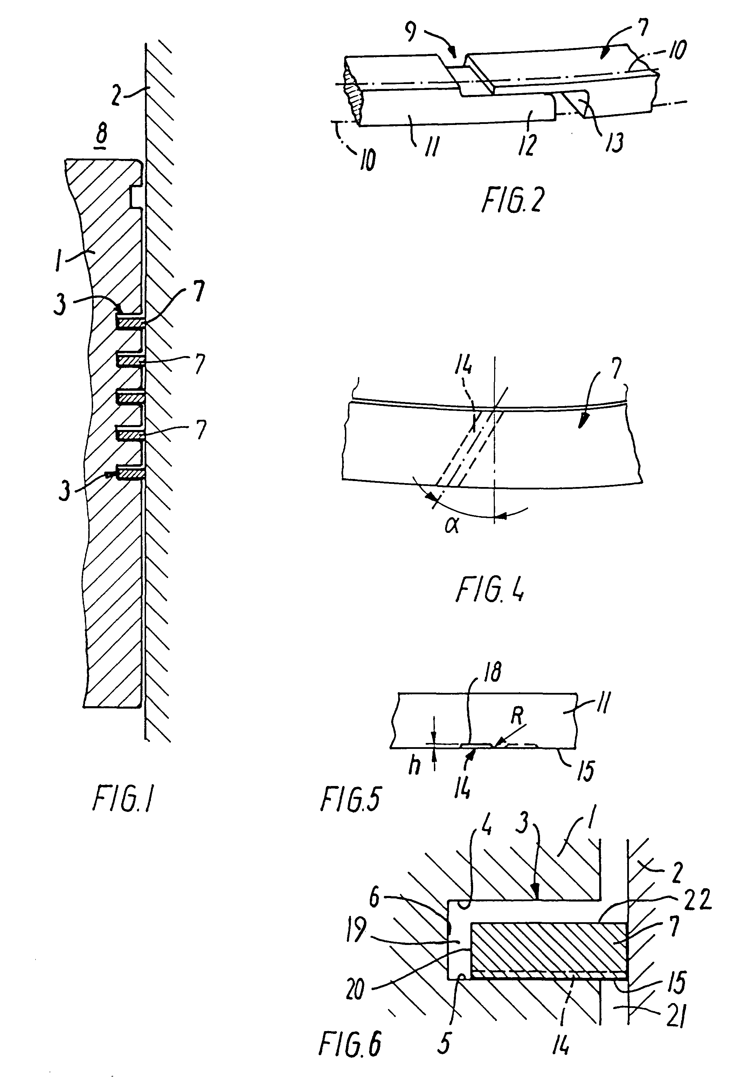

Fig. 1 shows a piston 1 mounted in a cylinder liner 2. The piston has several axially separated annular grooves 3, each, as shown in Fig. 6, having an upper groove face 4, a lower groove face 5 and a groove bottom 6. Piston rings 7 are inserted in the annular grooves to prevent the gas pressure in the working chamber 8 above the piston from spreading to the space below the piston. The piston ring has a largely gastight ring partition 9 rendering it possible to expand the ring diameter at the mounting in the annular groove 3 and permitting the two ends of the ring at the partition to pull away from each other as the ring gets worn.

An example of the design of an annular partition 9 is seen in Fig. 2, where gas flows through the partition are largely prevented. The outer rim of the annular groove is indicated by the dot-and-dash lines 10. The outer surface 11 of the ring abuts the inner surface of the cylinder liner 2. At the ring partition, one end of the ring has a projection 12 passing into a corresponding recess 13 at the other end of the ring. In the radial direction, the projection 12 is narrower than the ring 7, and at the inner surface of the ring the recess 13 is defined by an axially extending wall abutting the inner surface of the projection. The height of the projection 12 is also smaller than the ring height, and the recess 13 is defined upwards by a radially projecting wall abutting the upper surface of the projection. As the cross-section of the projection 12 fills out the cross-section of the recess 13, a substantially gastight closure of the ring partition is achieved. It is well-known to design the ring partition in other gastight manners.

The piston ring 7 has several leakage tracks 14 in its lower surface 15. In the example shown in Fig. 3, the ring has ten leakage tracks 14, evenly distributed over the periphery of the ring in such a manner that the two leakage tracks arranged diametrically opposite the ring partition 9 are located symmetrically about the diameter 16 passing through the ring partition so that the most heavily loaded ring area 17 at this diameter is located between the two leakage tracks. If the piston ring is alternatively manufactured with an uneven number of tracks, it may be necessary for the distance between the two leakage tracks at the area 17 to be longer than between the other leakage tracks.

As shown most clearly in Fig. 4, the longitudinal axis of the leakage tracks 14 has an angle α in relation to the radial direction of the ring so that the outflowing leak gas will act on the piston ring with a force in the peripheral direction, which makes the ring rotate in the annular groove. The angle α may, for example, be in the interval from 20° to 70° and in the example shown is 30°.

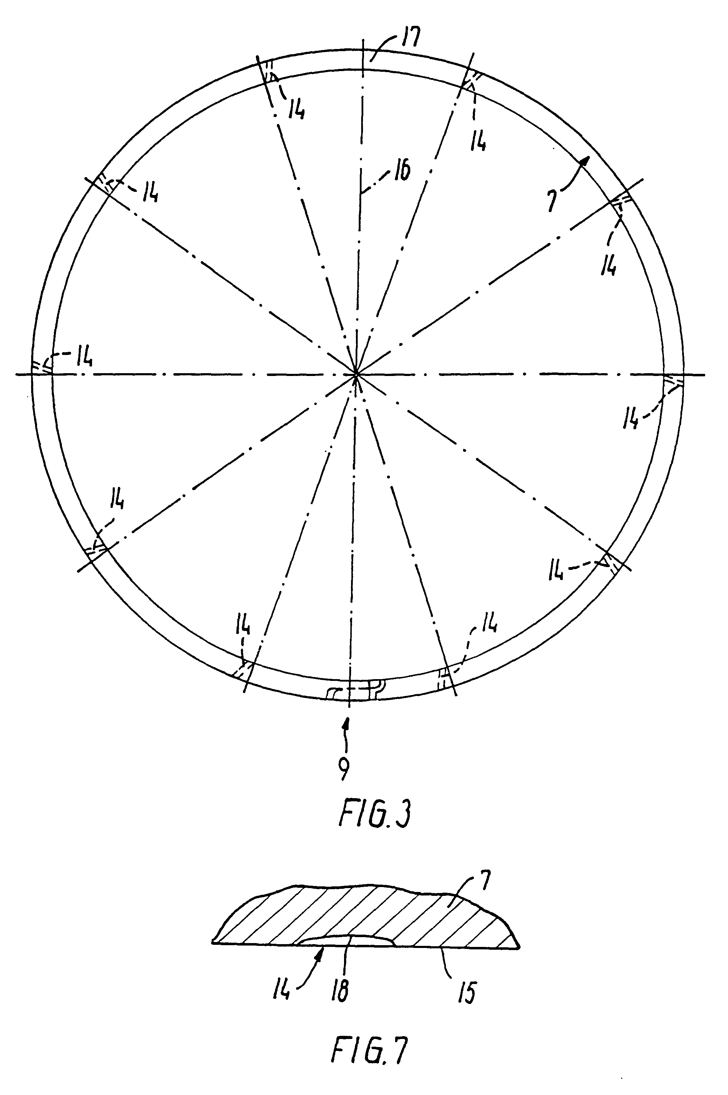

Fig. 5 shows the piston ring seen from the outside with the outward end of the leakage track 14 fully drawn up, and the inward end shown by a dashed line. The piston ring has a height of 6.5 mm, and the leakage track has a height of h = 0.5 mm and a width of 5 mm. In cross-section, the bottom 18 of the leakage track is substantially rectilinear, and each of the sides of the track is S-shaped and composed of two circular arc sections, of which the outermost has a radius R of 2 mm with its centre above the lower ring surface 15 and a tangential course into the latter, while the innermost has a radius of 2 mm with its centre located below the lower ring surface 15 and a tangential course into the bottom 18 of the leakage track to one side and into the outermost circular arc section to the other side. It is, of course, possible to form the leakage track with a quadrangular cross-section, but this results in larger stress concentrations at the corners of the track. In the alternative embodiment shown in Fig. 7, also the bottom 18 of the leakage track has a circular-arc-shaped cross-section with a relatively large radius of curvature and the centre thereof located below the lower ring surface 15.

In the cross-section shown in Fig. 6, the lower surface 15 of the piston ring abuts the lower groove face 5, and the leakage track 14 is seen to create gas flow communication between an annular space 19 between the inner surface 20 of the piston ring and the groove bottom 6 and an annular space 21 located below the piston ring between the inner surface of the cylinder liner 2 and the outer surface of the piston 1. As the upper surface 22 of the piston ring is some distance below the upper groove face 4, the gas may flow from an annular space located above the piston ring between the inner surface of the cylinder liner 2 and the outer surface of the piston via the space above the piston ring, the annular space 19, the leakage tracks 14 and into the annular space 21 to pressurize the latter and reduce the differential pressure across the piston ring.

The leakage areas in the piston rings can vary from ring to ring, and the bottom piston ring naturally has no leakage area, as it forms the bottom seal against the space below the piston.

When the piston ring is arranged in the annular groove 3 and the piston 1 is inserted in the cylinder liner 2, the ring diameter is smaller than in the unstressed condition of the ring, and there are tensile stresses in the ring material near the outer surface 11 and compressive stresses in the material near the inner surface 20. The ring stresses therefore keep the outer surface 11 of the ring in contact with the inner surface of the cylinder liner.

The piston ring and piston assembly according to the invention is applicable for internal combustion engines of both the two-stroke and the four-stroke type, but it is especially advantageous in large two-stroke crosshead engines with uniflow scavenging, viz. with scavenging air ports in the lower section of the cylinder liner and an exhaust valve in the cylinder cover. Such engines may, for example, have cylinder diameters in the interval from 250 to 1000 mm, and stroke lengths in the interval from 900 to 2400 mm, and they can be operated at very high mean pressures in the interval from 10 to 19 bar, which results in large loads on the piston rings. In these engines, the assembly according to the invention renders it possible to achieve long life for piston rings and cylinder liner despite the high load on the rings.

## Claims

1. Piston ring (7) and piston assembly (1) in a internal combustion engine, particularly a two-stroke, uniflow-scavenged crosshead engine, in which the piston in its peripheral surface has several axially separated annular grooves (3), each having an upper and a lower groove face (4, 5) and a groove bottom (6), and in which piston rings are inserted in the annular grooves to seal the working chamber (8) above the upper piston ring downwards during the compression and combustion strokes of the piston, at least one of the piston rings (7) having an axial height smaller than the axial distance between the upper and the lower groove faces in the pertaining annular groove so that the piston ring can move axially in the annular groove, and having a substantially gastight ring partition (9) allowing for an extension of the ring diameter at the mounting in the annular groove, and having several leakage tracks distributed over the periphery of the ring, **characterized in that** the leakage tracks (14) are formed in the lower ring surface (15) intended for contact with the lower groove face (5) and are slit-shaped having a slit width facing in the peripheral direction of the ring and being at least several times larger than the slit height (h) extending in the axial direction.

2. Piston ring and piston assembly according to claim 1, **characterized in that** the slit height (h) is smaller than 1 mm, preferably in the interval between 0.35 mm and 0.55 mm.

3. Piston ring and piston assembly according to claim 2, **characterized in that** the ring height is at least eight times larger than the slit height (h).

4. Piston ring and piston assembly according to any one of claims 1-3, **characterized in that** the width of the slit is no more than 20 times larger than the greatest height (h) of the slit.

5. Piston ring and piston assembly according to any one of claims 1-4, **characterized in that** the ring area (17) located diametrically opposite the ring partition is kept free of leakage tracks (14).

6. Piston ring and piston assembly according to any one of claims 1-5, **characterized in that** the lower ring surface (15) has at least four, preferably six and suitably from eight to sixteen leakage tracks (14).

7. Piston ring and piston assembly according to claim 6, **characterized in that** the leakage tracks (14) are evenly distributed over the periphery of the ring (7).

8. Piston ring and piston assembly according to any one of claims 1-7, **characterized in that** the total cross-sectional area Aₜₒₜ of the leakage tracks (14) is in the interval from D²/68000 to D²/5000, where D is the cylinder diameter in mm, and Aₜₒₜ is the area in mm².

9. Piston ring and piston assembly according to any one of claims 1-8, **characterized in that** the cross-section of the upper surface of the leakage track (14) is composed of at least three circular arc sections, of which the two outermost ones have their centres above the lower ring surface (15) and an intermediate one has its centre positioned below the lower ring surface (15).

## Patentansprüche

1. Kolbenring- (7) und Kolbenvorrichtung (1) einer Verbrennungskraftmaschine, insbesondere eines längsgespülten Zweitakt-Kreuzkopfmotors, in welchem der Kolben in seiner Umfangfläche mehrere axial getrennte Ringnuten (3) hat, die jeweils eine obere und eine untere Nutenseite (4, 5) und einen Nutenboden (6) aufweisen, und wo in die Ringnuten (8) Kolbenringe eingesetzt sind, um die Arbeitskammer (8) über dem obersten Kolbenring im Laufe des Kompressions- und Arbeitshubes nach unten zu dichten, wobei zumindest einer der Kolbenringe (7) eine axiale Höhe aufweist, die kleiner ist als der Axialabstand zwischen den oberen und den unteren Nutenseiten der zugehörigen Ringnut, so dass sich der Kolbenring in der Ringnut axial bewegen kann, sowie eine im wesentlichen gasdichte Ringteilung (9), die bei Montieren in die Ringnut eine Erweiterung des Ringdurchmessers ermöglicht, sowie mehrere über die Peripherie des Ringes verteilte Leckagespuren, **dadurch gekennzeichnet, dass** die Leckagespuren (14) in der zur Anlage an die untere Nutenseite (5) vorgesehenen Ringunterseite (15) ausgebildet und spaltenförmig sind mit einer in die Umfangrichtung des Ringes wendenden Spaltbreite, die mindestens mehrere Male grösser ist als die in Axialrichtung verlaufende Spalthöhe.

2. Kolbenring- und Kolbenvorrichtung nach Anspruch 1, **dadurch gekennzeichnet, dass** die Spalthöhe (h) kleiner als 1 mm, vorzugsweise im Intervall zwischen 0,35 und 0,55 mm, ist.

3. Kolbenring- und Kolbenvorrichtung nach Anspruch 2, **dadurch gekennzeichnet, dass** die Ringhöhe mindestens achtmal grösser als die Spalthöhe (h) ist.

4. Kolbenring- und Kolbenvorrichtung nach einem der Ansprüche 1-3, **dadurch gekennzeichnet, dass** die Spaltbreite höchstens 20 mal grösser als die grösste Höhe (h) des Spaltes ist.

5. Kolbenring- und Kolbenvorrichtung nach einem der Ansprüche 1-4, **dadurch gekennzeichnet, dass** die der Ringteilung diametral gegenüberliegende Ringfläche (17) frei von Leckagespuren (14) gehalten ist.

6. Kolbenring- und Kolbenvorrichtung nach einem der Ansprüche 1-4, **dadurch gekennzeichnet, dass** die Ringunterseite (15) mindestens vier, vorzugsweise sechs und passend acht bis sechszehn Leckagespuren (14) aufweist.

7. Kolbenring- und Kolbenvorrichtung nach Anspruch 6, **dadurch gekennzeichnet, dass** die Leckagespuren (14) über die Peripherie des Ringes (7) gleichmässig verteilt sind.

8. Kolbenring- und Kolbenvorrichtung nach einem der Ansprüche 1-7, **dadurch gekennzeichnet, dass** die gesamte Querschnittsfläche Aₜₒₜder Leckagespuren (14) im Intervall von D²/68000 bis D²/5000 ist, wobei D der Zylinderdurchmesser in mm, und Aₜₒₜ die Fläche in mm² ist.

9. Kolbenring- und Kolbenvorrichtung nach einem der Ansprüche 1-8, **dadurch gekennzeichnet, dass** sich der Querschnitt der Oberseite der Leckagespur (14) aus mindestens drei kreisbogenförmigen Abschnitten zusammensetzt, von denen die zwei äussersten Abschnitte ihr Zentrum über der Ringunterseite (15) haben, und ein dazwischenliegender Abschnitt sein Zentrum unter der Ringunterseite (15) hat.

## Revendications

1. Segment de piston (7) et arrangement de piston (1) dans un moteur à combustion interne, en particulier un moteur à cross, à deux temps et de balayage à sens unique, dans lequel le piston dans sa surface périphérique présente plusieurs rainures annulaires séparées de manière axiale (3), chacune ayant une face supérieure et une face inférieure de rainure (4, 5) et un fond de rainure (6), et dans lequel des segments de piston sont introduits dans les rainures annulaires pour étancher la chambre de travail (8) au-dessus du segment de piston supérieur vers le bas lors des courses motrices et de compression du piston, au moins l'un des segments de piston (7) présentant une hauteur axiale inférieure à la distance axiale entre la face supérieure et la face inférieure de rainure dans la rainure annulaire respective si bien que le segment de piston peut se déplacer de manière axiale dans la rainure annulaire, et présentant une séparation de segment essentiellement étanche aux gaz (9) permettant un élargissement du diamètre du segment au montage dans la rainure annulaire, et présentant plusieurs voies de fuite espacées sur la périphérie du segment, **caractérisés en ce que** les voies de fuite (14) sont formées dans la surface inférieure de segment (15) conçue pour contact avec la face inférieure de rainure (5) et sont en forme de fentes avec une ouverture de fente orientée dans la direction périphérique du segment et étant au moins plusieurs fois plus grande que la hauteur de fente (h) s'étendant dans la direction axiale.

2. Segment de piston et arrangement de piston selon la revendication 1, **caractérisés en ce que** la hauteur de fente (h) est inférieure à 1 mm, préférablement dans l'intervalle de 0,35 mm à 0,55 mm.

3. Segment de piston et arrangement de piston selon la revendication 2, **caractérisés en ce que** la hauteur de segment est au moins huit fois plus grande que celle de la fente (h).

4. Segment de piston et arrangement de piston selon l'une quelconque des revendications 1-3, **caractérisés en ce que** la largeur de la fente est au maximum 20 fois plus grande que la hauteur la plus grande (h) de la fente.

5. Segment de piston et arrangement de piston selon l'une quelconque des revendications 1-4, **caractérisés en ce que** l'étendue de segment (17) diamétralement opposée à la séparation de segment est laissée inoccupée de voies de fuite (14).

6. Segment de piston et arrangement de piston selon l'une quelconque des revendications 1-5, **caractérisés en ce que** la surface de segment inférieure (15) présente au moins quatre, préférablement six et de manière appropriée de huit à seize voies de fuite (14).

7. Segment de piston et arrangement de piston selon la revendication 6, **caractérisés en ce que** les voies de fuites (14) sont régulièrement espacées sur la périphérie du segment (7).

8. Segment de piston et arrangement de piston selon l'une quelconque des revendications 1-7, **caractérisés en ce que** l'aire totale de la coupe transversale Aₜₒₜ des voies de fuite (14) est dans l'intervalle de D²/68000 à D²/5000 où D est le diamètre de cylindre en mm, et Aₜₒₜ est l'aire en ₘₘ2_{.}

9. Segment de piston et arrangement de piston selon l'une quelconque des revendications 1-8, **ca** **ractérisés en ce que** la section de la surface supérieure de la voie de fuite (14) est composée d'au moins trois parties en arc de cercle dont les deux parties les plus extérieures ont leur centre au-dessus la surface inférieure de segment (15) et une partie intermédiaire a son centre placé au-dessous de la surface inférieure de segment (15).
